# EUROPEAN PATENT APPLICATION

(11) **EP 4 503 681 A1**
(43) Date of publication of application: **05.02.2025**
(21) Application number: 23778046.5
(22) Date of filing: 24.03.2023
(51) Int. Cl.: H04W 8/00

(54) **OFFLOAD PROCESSING METHOD, AND DEVICE AND STORAGE MEDIUM**

(30) Priority: 29.03.2022 CN 202210325973
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Yongjing, Beijing 100032 (CN); WANG, Dan, Beijing 100032 (CN); SUN, Tao, Beijing 100032 (CN); LU, Lu, Beijing 100032 (CN)
(74) Representative: Hertin und Partner Rechts- und Patentanwälte PartG mbB
(86) International application number: PCT/CN2023/083700
(87) International publication number: WO 2023/185678

(57) **Abstract**

A session breakout processing method, a device and a storage medium are provided, including: during a Home-Routed roaming PDU session establishment procedure or modification procedure, a H-SMF sending to a V-SMF one or a combination of the following information: EAS information of the V-PLMN, an ECS address of the V-PLMN, relevant information of an AF of the V-PLMN, information of authorization of local session breakout performed by V-SMF, and a session breakout policy; after V-SMF receiving first information sent by a NF of a H-PLMN, performing a local session breakout; a UPF of a V-PLMN receiving second information initiated by a UE, and sending the second information to the H-SMF; the V-SMF searching for a PCF of the V-PLMN, and performing a SM policy association with the PCF or triggering an SM policy association modification.

## Description

### CROSS REFERENCE OF RELATED APPLICATION

The present disclosure claims a priority of Chinese patent disclosure No. 202210325973.7 filed on March 29, 2022, which are incorporated herein by reference in its entirety.

### TECHNICAL FIELD

The present disclosure relates to the field of communication technology, and in particular to a session breakout processing method, a device and a storage medium.

### BACKGROUND

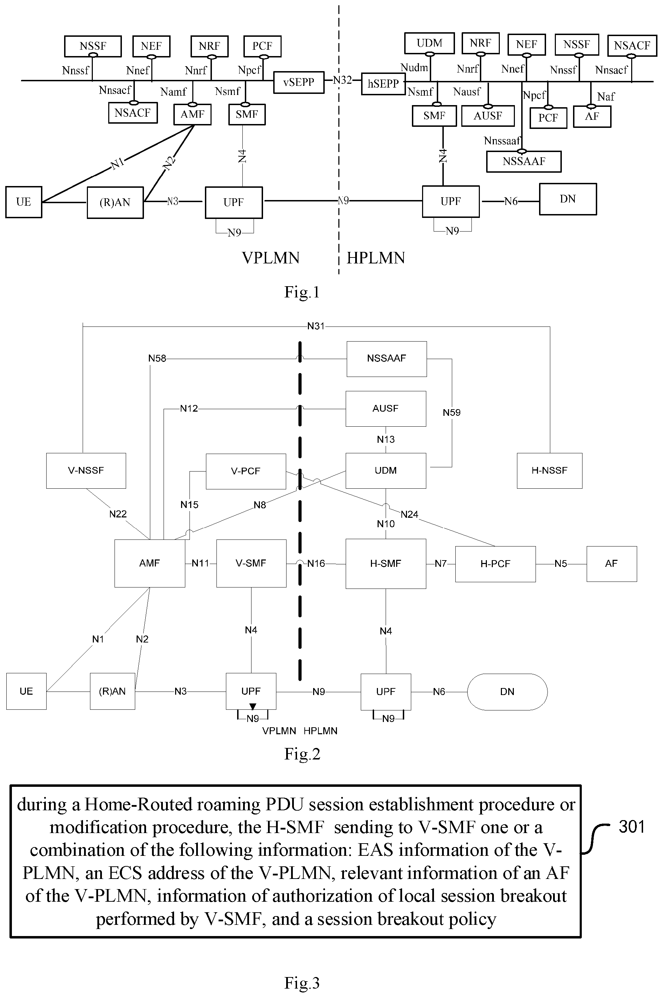

Fig.1 is a schematic diagram of the fifth-generation mobile communication (5th-Generation, 5G) network architecture in the case of Home-Routed (HR) roaming, and Figure 2 is a schematic diagram of the interface between network functions in the case of HR roaming. The 5G network architecture is divided into roaming and non-roaming scenarios, and the roaming scenarios are divided into Local Breakout (LBO) roaming and HR roaming scenarios. The 5G network architecture in the case of HR roaming is shown in Figure 1.

The interface between the network functions of its Visited Public Land Mobile Network (VPLMN) and Home Public Land Mobile Network (HPLMN) is shown in Figure 2.

Edge computing is one of the key technologies of 5G networks. Edge computing can be supported by the uplink classifier (ULCL), thereby realizing the ability of local session breakout. Before edge computing, when the user equipment (UE) accesses the application, the data flow needs to enter the data network (DN) through the user plane function (UPF). If edge computing nodes are deployed, the application can be deployed on the local edge computing platform, and the data flow of the user accessing the application can be offloaded to the local area through the ULCL session breakout function, reducing the burden on the core network.

5G core network, UPF, as a user plane function, can be inserted into the Protocol Data Unit (PDU) session by the session management function (SMF) as a ULCL uplink classifier to perform data session breakout. After being inserted into the ULCL, the ULCL connects two or more different UPFs as PDU Session Anchors (PSA), and each PSA can be connected to different data networks.

The shortcoming of the relevant technology is that in the Home-Routed roaming scenario, there is currently no solution that can support the use of edge calculation capabilities.

### SUMMARY

The present disclosure provides a session breakout processing method, device and storage medium to solve the problem that there is no solution that can support the use of edge computing capabilities in a Home-Routed roaming scenario.

The present disclosure provides the following technical solutions:
A method for sending information, including:
when a Home-Routed Protocol Data Unit (PDU) session is established or modified, sending to the V-PLMN SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy.

In the embodiment, the EAS information of the V-PLMN in the information is used by the V-SMF to configure an Edge Application Server Discovery Function (EASDF) of the V-PLMN.

In the embodiment, the method further includes:
H-SMF receiving fifth information sent by the V-SMF, where the fifth information includes one or a combination of: authorization of local session breakout in the V-PLMN, indication of supporting EASDF capability, and indication of supporting local session breakout capability in the V-PLMN.

In the embodiment, the EAS information of the V-PLMN received by the V-SMF is obtained by H-SMF from a network exposure function (NEF) of the H-PLMN.

In the embodiment, the relevant information of the AF of the V-PLMN received by the V-SMF is obtained by H-SMF from a policy control function (PCF) of the H-PLMN.

In the embodiment, the method further includes:
H-SMF obtaining sixth information from a unified data management (UDM) of the H-PLMN, where the sixth information indicates to perform a local session breakout.

A breakout method, including:
a V-SMF receiving first information sent by a network function (NF) of a H-PLMN and performing a local session breakout.

In the embodiment, the NF of the H-PLMN is an SMF, or a policy control function (PCF), or a unified data management (UDM).

In the embodiment, the method further includes:
the V-SMF sending a session breakout policy to the user plane function (UPF) of the V-PLMN.

In the embodiment, the performing local breakout includes:
the V-SMF inserting or updating an uplink classifier (ULCL) according to first information, and selecting a local data network service (DNS) server according to the first information.

In the embodiment, the first information includes one or a combination of the following information:
a data network access identifier (DNAI), application information, edge application server (EAS) information, application service identification information.

In the embodiment, the V-SMF sends the EAS information to an edge application server discovery function (EASDF) of the V-PLMN.

In the embodiment, the EAS information is obtained from H-SMF, or from a network exposure function (NEF) of the V-PLMN, or from other network functions (NFs) of the V-PLMN.

A method for processing service request, including:
a user plane function (UPF) of a V-PLMN receiving second information initiated by a user equipment (UE), and sending the second information to a H.

In the embodiment, the second information is sent to H-SMF via V-SMF or a UPF of a H-PLMN.

In the embodiment, the second information is a data network service (DNS) query message for discovering an edge application server.

In the embodiment, the method further includes:
the UPF of the V-PLMN sending second information to a DNS server of the V-PLMN for processing.

In the embodiment, the method further includes:
after the UPF of the V-PLMN receives a DNS feedback, the UPF of the V-PLMN returning the feedback information to the UE through an uplink classifier (ULCL) of the V-PLMN.

A PCF selection method, including:
a V-SMF searching for a policy control function (PCF) of the V-PLMN, and performing a session management (SM) policy association with the PCF or triggering an SM policy association modification.

In the embodiment, the V-SMF searches for the PCF of the V-PLMN in a Home-Routed PDU session.

In the embodiment, the method further includes:
receiving third information sent by the PCF of the V-PLMN, to insert or update an uplink classifier (ULCL) in the V-PLMN.

In the embodiment, the method further includes:
the V-SMF inserting or updating the ULCL according to the third information, and selecting a data network service (DNS) server of the V-PLMN according to the third information.

In the embodiment, the third information includes one or a combination of the following information:
a data network access identifier (DNAI), application information, edge application server (EAS) information, application service identification information.

A breakout method including:
a V-SMF receiving fourth information from a policy control function (PCF) of the V-PLMN or a H-SMF in the case of a Home-Routed PDU session;
according to the fourth information, inserting or updating an uplink classifier (ULCL) in the V-PLMN of a terminal device, and discovering a data network service (DNS) server in the V-PLMN of the terminal device.

In the embodiment, the fourth information is sent by a unified data repository (UDR) of the V-PLMN to the PCF of the V-PLMN through a data management notification Nudr_DM_Notify message.

In the embodiment, the fourth information is sent by the PCF of the V-PLMN to the V-SMF through a session management policy control update notification Npcf_SMPolicyControl_UpdateNotify message.

In the embodiment, the fourth information includes one or a combination of the following information:
a data network access identifier (DNAI), application information, edge application server (EAS) information, application service identification information.

A H-SMF, including:
a processor configure to read a program in a memory to perform:
when a Home-Routed Protocol Data Unit (PDU) session is established or modified, a H-SMF sending to the V-SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy;
a transceiver, configured to receive and send data under a control of the processor.

In the embodiment, the EAS information of the V-PLMN in the information is used by the V-SMF to configure an Edge Application Server Discovery Function (EASDF) of the V-PLMN.

In the embodiment, further including:
receiving fifth information sent by the V-SMF, where the fifth information includes one or a combination of: authorization of local session breakout in the V-PLMN, indication of supporting EASDF capability, and indication of supporting local breakout capability in the V-PLMN.

In the embodiment, the EAS information of the V-PLMN received by the V-SMF is obtained by H-SMF from a network exposure function (NEF) of the H-PLMN.

In the embodiment, the relevant information of the AF of the V-PLMN received by the V-SMF is obtained by H-SMF from a policy control function (PCF) of the H-PLMN.

In the embodiment, further including:
H-SMF obtaining sixth information from a unified data management (UDM) of the H-PLMN, where the sixth information indicates to perform a local breakout.

A H-SMF, including:
a H-SMF sending module, configured to:
when a Home-Routed roaming Protocol Data Unit (PDU) session is established or modified, send to the V-PLMN SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy.

In the embodiment, the H-SMF sending module is further configured to send the EAS information of the V-PLMN in the information used by the V-SMF to configure an Edge Application Server Discovery Function (EASDF) of the V-PLMN.

In the embodiment, further including:
a H-SMF receiving module, configured to receive fifth information sent by the V-SMF, where the fifth information includes one or a combination of: authorization of local session breakout in the V-PLMN, indication of supporting EASDF capability, and indication of supporting local session breakout capability in the V-PLMN.

In the embodiment, the H-SMF sending module is further configured to send the received EAS information of the V-PLMN obtained by H-SMF from a network exposure function (NEF) of the H-PLMN

In the embodiment, the H-SMF sending module is further configured to send the received relevant information of the AF of the V-PLMN obtained by H-SMF from a policy control function (PCF) of the H-PLMN.

In the embodiment, the H-SMF receiving module is configured to obtain sixth information from a unified data management (UDM) of the H-PLMN, where the sixth information indicates to perform a local breakout.

A V-SMF, including:
a processor configure to read a program in a memory to perform:
after receiving first information sent by a network function (NF) of a H-PLMN, performing a local session breakout;
a transceiver, configured to receive and send data under a control of the processor.

In the embodiment, the NF of the H-PLMN is an SMF, or a policy control function (PCF), or a unified data management (UDM).

In the embodiment, further including:
sending a session breakout policy to the user plane function (UPF) of the V-PLMN.

In the embodiment, the performing local breakout includes:
inserting or updating an uplink classifier (ULCL) according to first information, and selecting a local data network service (DNS) server according to the first information.

In the embodiment, the first information includes one or a combination of the following information:
a data network access identifier (DNAI), application information, edge application server (EAS) information, application service identification information.

In the embodiment, the EAS information is sent to an edge application server discovery function (EASDF) of the V-PLMN.

In the embodiment, the EAS information is obtained from H-SMF, or from a network exposure function (NEF) of the V-PLMN, or from other network functions (NFs) of the V-PLMN.

A V-SMF, including:
a V-SMF breakout module, configured to perform a local session breakout after receiving first information sent by a network function (NF) of a H-PLMN.

In the embodiment, the NF of the H-PLMN is an SMF, or a policy control function (PCF), or a unified data management (UDM).

In the embodiment, further including: a V-SMF sending module, configured to send a session breakout policy to the user plane function (UPF) of the V-PLMN.

In the embodiment, the V-SMF breakout module is further configured to insert or update an uplink classifier (ULCL) according to first information, and selecting a local data network service (DNS) server according to the first information.

In the embodiment, the first information includes one or a combination of the following information:
a data network access identifier (DNAI), application information, edge application server (EAS) information, application service identification information.

In the embodiment, an SMF sending module of a V-PLMN is further configured to send the EAS information to an edge application server discovery function (EASDF) of the V-PLMN.

In the embodiment, the EAS information is obtained from H-SMF, or from a network exposure function (NEF) of the V-PLMN, or from other network functions (NFs) of the V-PLMN.

A UPF of V-PLMN, including:
a processor configure to read a program in a memory to perform:
receive second information initiated by a user equipment (UE), and send the second information to a H-SMF;
a transceiver, configured to receive and send data under a control of the processor.

In the embodiment, the second information is sent to H-SMF via V-SMF or a UPF of a H-PLMN.

In the embodiment, the second information is a data network service (DNS) query message for discovering an edge application server.

In the embodiment, further including:
sending second information to a DNS server of the V-PLMN for processing.

In the embodiment,, further including:
after the UPF of the V-PLMN receives a DNS feedback, the UPF of the V-PLMN returning the feedback information to the UE through an uplink classifier (ULCL) of the V-PLMN.

A UPF of V-PLMN, including:
a user plane function (UPF) sending module of a V-PLMN, configured to receive second information initiated by a user equipment (UE) and send the second information to a H-SMF.

In the embodiment, the UPF sending module of the V-PLMN is further configured to send the second information to H-SMF via a V-SMF or a UPF of a H-PLMN.

In the embodiment, the second information is a data network service (DNS) query message for discovering an edge application server.

In the embodiment, the UPF sending module of the V-PLMN is further configured to send second information to a DNS server of the V-PLMN for processing.

In the embodiment, the UPF sending module of the V-PLMN is further configured to, after the UPF of the V-PLMN receives a DNS feedback, return the feedback information to the UE through an uplink classifier (ULCL) of the V-PLMN.

A V-SMF, including:
a processor configure to read a program in a memory to perform:
searching for a policy control function (PCF) of the V-PLMN, and performing a session management (SM) policy association with the PCF or triggering an SM policy association modification;
a transceiver, configured to receive and send data under a control of the processor.

In the embodiment, the PCF of the V-PLMN is searched in a Home-Routed PDU session.

In the embodiment, further including:
receiving third information sent by the PCF of the V-PLMN, to insert or update an uplink classifier (ULCL) in the V-PLMN.

In the embodiment,, further including:
inserting or updating the ULCL according to the third information, and selecting a data network service (DNS) server of the V-PLMN according to the third information.

In the embodiment, the third information includes one or a combination of the following information:
a data network access identifier (DNAI), application information, edge application server (EAS) information, application service identification information.

A V-SMF, including:
a V-SMF selection module, configured to search for a policy control function (PCF) of the V-PLMN, and perform a session management (SM) policy association with the PCF or trigger an SM policy association modification.

In the embodiment, the SMF selection module of the V-PLMN is further configured to search the PCF of the V-PLMN in a Home-Routed PDU session.

In the embodiment, further including: an SMF receiving module of the V-PLMN configured to:
receive third information sent by the PCF of the V-PLMN, to insert or update an uplink classifier (ULCL) in the V-PLMN.

In the embodiment, the V-SMF selection module is further configured to insert or update the ULCL according to the third information, and select a data network service (DNS) server of the V-PLMN according to the third information.

In the embodiment, the third information includes one or a combination of the following information:
a data network access identifier (DNAI), application information, edge application server (EAS) information, application service identification information.

A V-SMF, including:
a processor configure to read a program in a memory to perform:
receiving fourth information from a policy control function (PCF) of a V-PLMN or an H-SMF in the case of a Home-Routed PDU session;
according to the fourth information, inserting or updating an uplink classifier (ULCL) in the V-PLMN of a terminal device, and discovering a data network service (DNS) server in the V-PLMN of the terminal device;
a transceiver, configured to receive and send data under a control of the processor.

In the embodiment, the fourth information is sent by a unified data repository (UDR) of the V-PLMN to the PCF of the V-PLMN through a data management notification Nudr_DM_Notify message.

In the embodiment, the fourth information is sent by the PCF of the V-PLMN to the V-SMF through a session management policy control update notification Npcf_SMPolicyControl _UpdateNotify message.

In the embodiment, the fourth information includes one or a combination of the following information:
a data network access identifier (DNAI), application information, edge application server (EAS) information, application service identification information.

A V-SMF, including:
a V-SMF receiving module, configured to receive fourth information from a policy control function (PCF) of the V-PLMN or a H-SMF in the case of a Home-Routed PDU session;
a V-SMF processing module, configured to, according to the fourth information, insert or update an uplink classifier (ULCL) in the V-PLMN of a terminal device, and discover a data network service (DNS) server in the V-PLMN of the terminal device.

In the embodiment, the V-SMF receiving module is further configured to receive the fourth information sent by a unified data repository (UDR) of the V-PLMN to the PCF of the V-PLMN through a data management notification Nudr_DM_Notify message.

In the embodiment, the SMF receiving module of the V-PLMN is further configured to receive the fourth information sent by the PCF of the V-PLMN to the V-SMF through a session management policy control update notification Npcf_SMPolicyControl _UpdateNotify message.

In the embodiment, the fourth information includes one or a combination of the following information:
a data network access identifier (DNAI), application information, edge application server (EAS) information, application service identification information.

A computer-readable storage medium, storing a computer program, where the computer program is executed by a processor to perform the method hereinabove.
the present disclosure are as follows:

The prior art does not describe how to use edge computing functions in the HR roaming scenario. The technical solution provided in this disclosure addresses how to utilize edge computing capabilities in a Home-Routed (HR) roaming scenario, including the discovery of an Edge Application Server (EAS) or an Edge Host Environment (EHE). Here, the EHE contains or is equal to an instance of the EAS. When the UE accesses the EAS, it can be equivalently considered that the UE has already accessed or visited the EHE. Additionally, this solution explains how to perform local routing of traffic within the VPLMN, thereby filling a research gap in related technologies.

### BRIEF DESCRIPTION OF THE DRAWINGS

The drawings described herein are used to provide a further understanding of the present disclosure and constitute a part of the present disclosure. The illustrative embodiments of the present disclosure and their descriptions are used to explain the present disclosure and do not constitute an improper limitation on the present disclosure. In the drawings:
Fig.1 is a schematic diagram of a 5G network architecture in a Home-Routed roaming situation in the background technology;
Fig.2 is a schematic diagram of interfaces between network functions in the case of HR roaming in the related art;
Fig.3 is a schematic diagram of an implementation flow of a method for sending information on the HSMF side in an embodiment of the present disclosure;
Fig.4 is a schematic diagram of a flow chart of a breakout method on the VSMF side in an embodiment of the present disclosure;
Fig.5 is a schematic diagram of an implementation flow of a method for processing a service request on the VUPF side in an embodiment of the present disclosure;
Fig.6 is a schematic diagram of an implementation flow of a PCF selection method on the VSMF side in an embodiment of the present disclosure;
Fig.7 is a schematic diagram of a flow chart of a breakout method on the VSMF side in an embodiment of the present disclosure;
Fig.8 is a schematic diagram of an implementation architecture of Example 1 in the embodiments of the present disclosure;
Fig.9 is a schematic diagram of a flow chart of a flow splitting implementation process in Example 1 according to an embodiment of the present disclosure;
Fig. 10 is a schematic diagram of an implementation architecture of Example 2 in the embodiments of the present disclosure;
Fig. 11 is a schematic diagram of a flow chart of a second embodiment of the present disclosure;
Fig. 12 is a schematic diagram of an implementation architecture of Example 3 in the embodiments of the present disclosure;
Fig. 13 is a schematic diagram of a three-way splitting implementation process in an embodiment of the present disclosure;
Fig. 14 is a schematic diagram of a flow chart of a fourth embodiment of the present disclosure;
Fig. 15 is a schematic diagram of the SMF structure of the home domain in the embodiment of the present disclosure;
Fig. 16 is a schematic diagram of the SMF structure of the V-PLMN in an embodiment of the present disclosure;
Fig. 17 is a schematic diagram of the UPF structure of the V-PLMN in an embodiment of the present disclosure;
Fig. 18 is a schematic diagram of the SMF structure of the V-PLMN in an embodiment of the present disclosure; and
Fig. 19 is a schematic diagram of the SMF structure of the V-PLMN in an embodiment of the present disclosure.

### DETAILED DESCRIPTION

During the course of the disclosure, the inventors noticed that:
In the 5G network architecture standard research of the 3rd Generation Partnership Project (3GPP), edge computing focuses more on accessing local services and is not combined with roaming scenarios. However, with the development of the network, in roaming scenarios, how UE uses edge computing capabilities to discover edge application servers and use local session breakout capabilities to access local services in the visited location has become a problem that needs to be solved.

Currently, edge computing is used more in roaming scenarios in LBO. However, due to the limited number of data network names (DNNs) supported by terminals and the need for actual network deployment, how to use edge computing in HR roaming scenarios has become an urgent problem to be solved.

Based on this, the technical solution provided by the embodiment of the present disclosure solves the problem of how to use edge computing capabilities in a Home-Routed roaming scenario, including the discovery of an edge application server (Edge Application Server, EAS) or an edge application server deployment environment (Edge Host Environment, EHE). In the solution provided by the embodiment, EHE includes or is equal to an EAS instance. When a UE accesses EAS, it can be equivalently considered that the UE has accessed or accessed EHE, as well as how to perform local routing of traffic within a VPLMN.

The specific implementation of the present disclosure is described below with reference to the accompanying drawings.

In the process of explanation, the implementation of the Home SMF (HSMF), the Visited SMF (VSMF), the Visited UPF (VUPF), and the Visited PCF (VPCF; PCF: Policy Control Function) will be explained respectively, and then an example of their coordinated implementation will be given to better understand the implementation of the solution given in the embodiment of the present disclosure. This way of explanation does not mean that they must be implemented in coordination or must be implemented separately. In fact, when they are implemented separately, they also solve the problems on their own side, and when they are used in combination, better technical effects will be obtained.

To make it easier to explain the difference, the H in the name stands for home location, such as HSMF for home location SMF, and the V stands for visited location, such as VPCF for visited location PCF, and the others are similar. For example:
VPLMN is the V-PLMN of the terminal device, HPLMN is the HPLMN of the terminal device, and VAF is the AF of the V-PLMN.

The functional entities involved in the embodiment are mainly as follows:
CP: control plane;
UP: user plane;
UE: user entity, user entity;
NEF: network exposure function;
NRF: network repository function, performing management of network function (NF) services;
AF: application function. It can be a third-party application or an operator's own business. If it is a third-party application, AF needs to interact with PCF or UDM through NEF;
PDU session: Protocol data unit session;
SMF: session management function;
AMF: access and mobility management function;
UPF: user plane function;
UDM: unified data management.

Fig.3 is a schematic diagram of an implementation flow of a method for sending information on the HSMF side, as shown in the figure, including:
Step 301: during a Home-Routed roaming Protocol Data Unit (PDU) session establishment procedure or modification procedure, a H-SMF sending to a V-SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy.

The EAS information refers to EAS deployment information and/or other EAS related information.

The EAS information may be EAS deployment information and/or other EAS related information, which is information describing the edge application server, and can be used for discovering the edge application server and configuring the Edge Application Server Discovery Function (EASDF). The SMF can obtain the relevant information of the Data Network Service (DNS) server from the information.

Relevant information of AF may include external application identifier, application service identifier, data network access identifier (DN Access Identifier, DNAI), related routing profile identifier, N6 traffic routing information, EAS deployment information, etc.

In the embodiment, the information is sent via first information, and the first information is used for PDU session request establishment or update.

Specifically, the information may be sent via a PDU session establishment request (Nsmf_PDUSession_Create Request) or a PDU session update request (Nsmf_PDUSession_Update Request).

In the embodiment, the EAS information of the V-PLMN of the terminal device in the information is used for the V-SMF to configure the V-PLMN EASDF.

Specifically, the EAS information may be used by the VSMF to configure the V-PLMN EASDF.

In the embodiment, it further includes:
H-SMF receiving fifth information sent by the V-SMF, where the fifth information includes one or a combination of: authorization of local session breakout in the V-PLMN, indication of supporting EASDF capability, and indication of supporting local session breakout capability in the V-PLMN.

The fifth information may be or include at least one of the following contents or a combination thereof: authorization of local session breakout in the V-PLMN, indication of supporting EASDF capability, and indication of supporting local session breakout capability in the V-PLMN.

For example, when the fifth information only includes authorization to request local session breakout in the V-PLMN, the fifth information is authorization to request local session breakout in the V-PLMN;
When the fifth information only includes an indication of supporting the EASDF capability, the fifth information is an indication of supporting the EASDF capability;
When the fifth information only includes an indication of supporting the local session breakout capability in the V-PLMN, the fifth information is an indication of supporting the local session breakout capability in the V-PLMN.

In the embodiment, the EAS information of the V-PLMN of the terminal device received by the V-SMF is obtained by H-SMF from the NEF of the home domain.

In the embodiment, the information related to the AF of the V-PLMN received by the V-SMF is obtained by H-SMF from the PCF of the H-PLMN.

Specifically, the H-PLMN AF sends AF-related information to the H-PLMN NEF through an AF request. The relevant information of AF can affect the traffic routing of the session, and may include external application identifiers, application service identifiers, DNAI, relevant routing profile identifiers, N6 traffic routing information, EAS deployment information, etc. The H-PLMN NEF stores the AF request information in the H-PLMN unified data repository (Unified Data Repository, UDR). The H-PLMN PCF subscribes to changes in AF requests and receives notifications from the H-PLMN UDR, which include AF request information. Or the H-PLMN AF directly sends the AF request to the H-PLMN PCF. The PCF generates the corresponding policy based on the AF request and sends the policy information to the H- PLMN. The policy information includes relevant information of the AF.

In the embodiment, H-SMF obtains the sixth information from the UDM of the H-PLMN, and the sixth information may indicate to perform local session breakout.

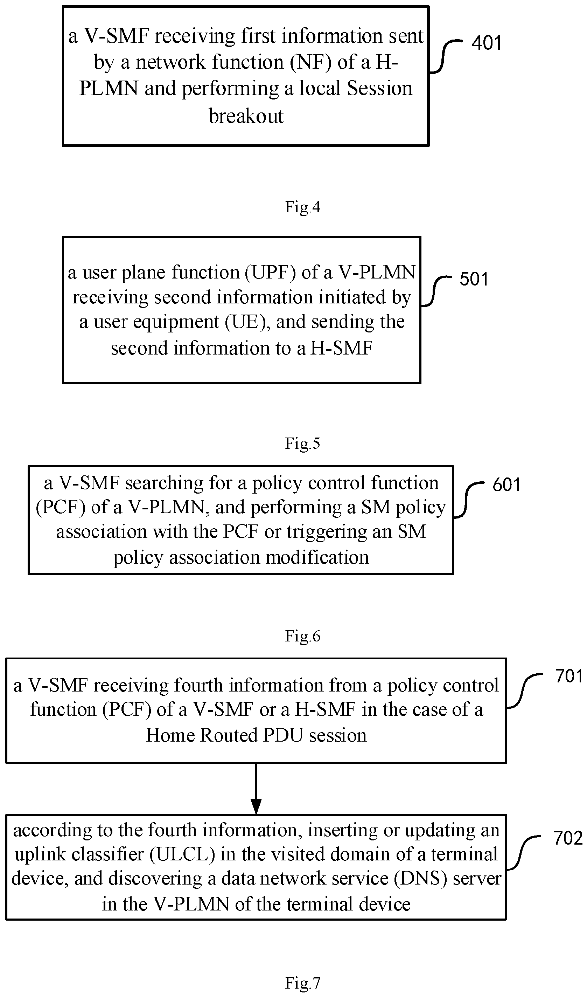

Fig.4 is a schematic diagram of the implementation flow of the shunt method on the VSMF side, as shown in the figure, including:
Step 401: Session Management Function in Visited Public Land Mobile Network (V-SMF) receiving first information sent by a network function (NF) of a H-PLMN and performing a local session breakout.

In the embodiment, the NF of the H-PLMN may be SMF, PCF, or UDM.

In the embodiment, the method may further include:
the V-SMF sending the session breakout policy to the UPF in the V-PLMN via an N4 session message, and instructs the UPF in the V-PLMN to identify the service flow.

In the embodiment, performing local session breakout includes
the V-SMF inserting or updating an uplink classifier (ULCL) according to first information, and selecting a local data network service (DNS) server according to the first information.

In the embodiment, the EAS information is obtained from H-SMF, or from the NEF of the V-PLMN, or from other NFs of the V-PLMN.

Fig.5 is a schematic diagram of an implementation flow of a method for processing a service request on the VUPF side, as shown in the figure, including:
Step 501: a user plane function (UPF) of a V-PLMN receiving second information initiated by a user equipment (UE), and sending the second information to a H-SMF.

The sending and receiving in the implementation may be direct sending and receiving, or may be indirect sending and receiving, for example, sending and receiving through forwarding by one or more network elements.

In the embodiment, the second information is sent to H-SMF, through the V-SMF or the UPF of the H-PLMN.

In the embodiment, the second information is a DNS query message used for discovering the edge application server.

In the embodiment, the method may further include:
The UPF of the V-PLMN sends the second information to the DNS server of the V-PLMN for processing.

In the embodiment, the method may further include:
After receiving the DNS feedback, the UPF of the V-PLMN returns the feedback information to the UE through the ULCL of the V-PLMN.

Fig.6 is a schematic diagram of the implementation flow of the PCF selection method on the VSMF side, as shown in the figure, including:
Step 601: a Session Management Function in Visited Public Land Mobile Network (V-SMF) searching for a policy control function (PCF) of the V-PLMN, and performing a session management (SM) policy association with the PCF or triggering an SM policy association modification.

In the embodiment, the V-SMF searches for the PCF of the V-PLMN in the case of a Home-Routed PDU session. Among them, the session management policy association is SM Policy Association, and the session management policy association modification is SM Policy Association Modification.

Specifically, during the Home-Routed roaming PDU session establishment process, the V-SMF finds a PCF in the V-PLMN of the terminal device to perform a subscription query or update, and performs SM Policy Association Establishment (policy association establishment) or triggers SM Policy Association Modification (policy association modification) with the PCF.

In the embodiment, the method may further include:
The third information sent by the PCF of the V-PLMN is received, and is used for inserting or updating the ULCL in the V-PLMN of the terminal device.

In the embodiment, the third information sent by the PCF of the V-PLMN is sent by the PCF of the V-PLMN through an Npcf_SMPolicyControl_UpdateNotify message.

In the embodiment, the method may further include:
The V-SMF inserts or updates the ULCL according to the third information, and selects a DNS server of the V-PLMN according to the third information.

In the embodiment, the third information includes one or a combination of the following information:
DNAI, application information, EAS information, application service identification information.

Fig. 7 is a schematic diagram of a flow chart of a breakout method on the VSMF side, as shown in the figure, including:
Step 701: a Session Management Function in Visited Public Land Mobile Network (V-SMF) receiving fourth information from a policy control function (PCF) of the V-PLMN or H-SMF in the case of a Home-Routed PDU session;
Step 702: according to the fourth information, inserting or updating an uplink classifier (ULCL) in the V-PLMN of a terminal device, and discovering a data network service (DNS) server in the V-PLMN of the terminal device.

In the embodiment, the fourth information is the fourth information sent by the UDR of the V-PLMN to the PCF of the V-PLMN through a Nudr_DM_Notify (data management notification) message.

In the embodiment, the fourth information is sent by the PCF of the V-PLMN to the V-SMF through the Npcf_SMPolicyControl_UpdateNotify (session management policy control update notification) message. Npcf and Nudr are two different interfaces. The specific meanings of the Npcf and Nudr interfaces can be found in the definitions in the 3Gpp standard protocol, and will not be repeated in this application.

In the embodiment, the fourth information includes one or a combination of the following information:
DNAI, application information, EAS information, application service identification information.

The solution mainly solves the problem of how to use edge computing capabilities in Home-Routed roaming scenarios, including edge application servers (EAS) or edge application server deployment environments (The following describes the discovery of the Edge Host Environment (EHE) and how to perform local routing of traffic within the VPLMN.

### Embodiment 1 :

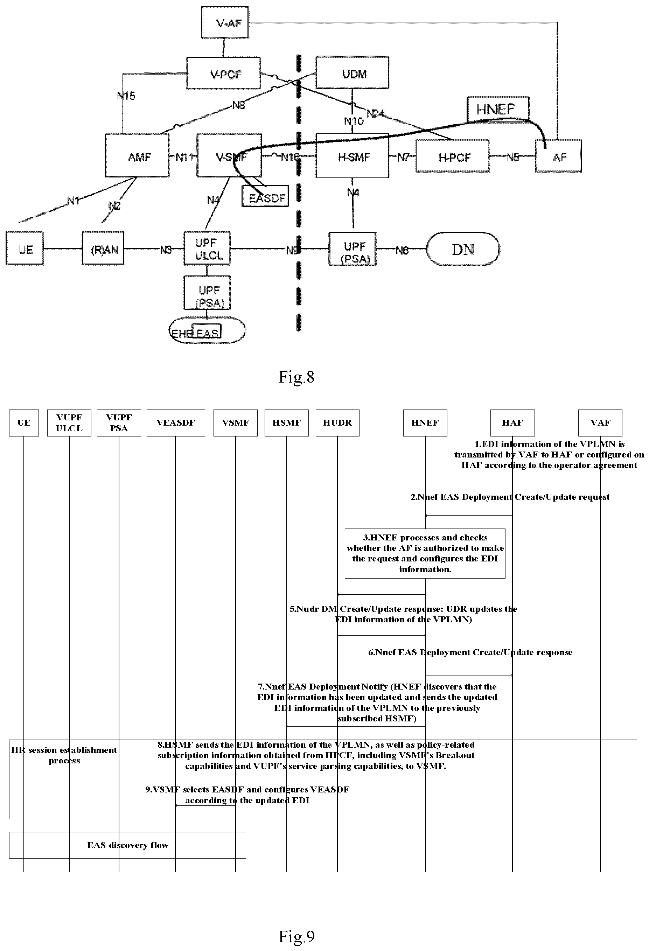

Fig.8 is a schematic diagram of the implementation architecture of the first embodiment. As shown in the figure, under this architecture, for certain application services, the HPLMN knows the deployment information of the EAS of the related VPLMN. The application function (AF) of the HPLMN passes the EAS deployment information (EDI) of the VPLMN to the VSMF through the AF-HNEF (home NEF; NEF: network capability exposure function, Network Exposure Function)-HSMF-VSMF path. The VSMF configures the VEASDF (visited EASDF; EASDF: edge application server discovery function, Edge Application Server Discovery Function) according to the EDI information. After the session is established, the VSMF dynamically inserts the ULCL and PSA according to the data network service (DNS) query result returned by the VEASDF to perform local session breakout within the VPLMN.

Fig. 9 is a schematic diagram of a flow chart of a flow splitting implementation in accordance with the first embodiment. As shown in the figure, the flow splitting implementation in this architecture may include:
1. The EDI information of the VPLMN is transmitted from the VAF (AF of the VPLMN) to the HAF (AF of the HPLMN) or configured on the HAF according to the operator agreement;
2. HAF brings the received VPLMN EDI information to HNEF through Nnef_EAS Deployment_Create/Update request (Nnef interface_EAS deployment_create/update request);
3. HNEF processes and checks whether HAF is authorized to request and other related operations;
4. HNEF stores the VPLMN EDI information in HUDR (Home UDR; UDR: Unified Data Repository) through Nudr_DM_Create/Update request (Nudr_DM_Create/Update request; DM: Unified Data Management Entity );
5. HUDR replies with HNEF Nudr_DM_Create/Update response.
6. HNEF replies to HAF Nnef_EAS Deployment_Create/Update response (Nnef interface_EAS deployment_create/update response);
7. HNEF finds that the EDI information is updated, and sends the updated VPLMN EDI information to the HSMF that has subscribed to the service before through Nnef_E AS Deployment_Notify (Nnef interface_EAS deployment_notification);
8. During the establishment of the Home-Routed roaming PDU session, HSMF sends the EDI information of the VPLMN and the policy-related subscription information obtained from the HPCF (home PCF), including the VSMF's session breakout capability and the VUPF's service resolution capability, to the VSMF.
9. VSMF configures EASDF based on the received EDI information;
   EAS discovery process: After the UE initiates a service request, SMF discovers EAS based on the DNS reply returned by EASDF and dynamically inserts ULCL and Local PDU Session Anchor (LPSA) for local session breakout.

### Embodiment 2:

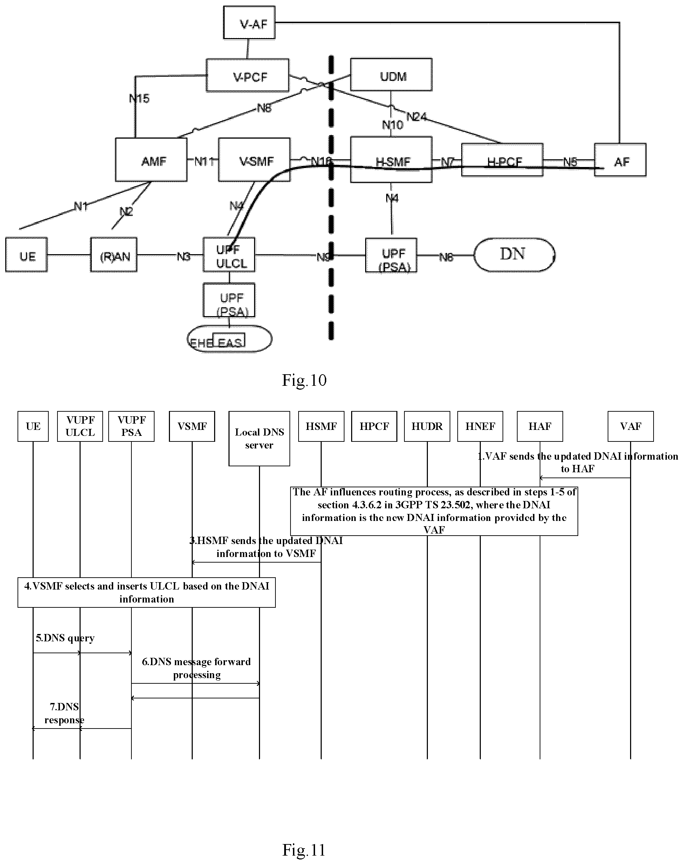

Fig. 10 is a schematic diagram of the implementation architecture of the second embodiment. As shown in the figure, under this architecture, for certain special application services, when the HPLMN knows the EAS deployment of the VPLMN, the AF of the HPLMN transmits the EDI information of the VPLMN to the VSMF through the AF-HNEF-HSMF-VSMF path. The VSMF configures the EASDF according to the EDI information. After the session is established, if the relevant information of the AF is modified, the VAF sends the updated AF-related information such as the DN Access Identifier (DNAI) information and the EAS information to the HAF, and uses the AF influence process to bring it to the VSMF through the VAF-HAF-HPCF (home PCF; PCF: Policy Control Function)-HSMF-VSMF path. The VSMF finds the corresponding local DNS server (local DNS server), ULCL and LPSA according to the DNAI information and/or EAS information in the AF request, and performs local session breakout within the VPLMN.

Fig. 11 is a schematic diagram of a flow chart of a flow splitting implementation in Embodiment 2. As shown in the figure, the flow splitting implementation in this architecture may include:
1. VAF sends DNAI information, EAS information and other AF-related information to HAF;
2. HAF sends the information requested by AF (including DNAI information and/or EAS information, AF service identifier, etc.) to HSMF through the AF influence routing process;
3. During the Home-Routed roaming PDU session establishment process, HSMF sends the above information to VSMF. If during this process, VSMF receives the above information sent by HSMF and the EDI information of VPLMN at the same time, VSMF will give priority to the most recently received information to determine the ULCL UPF and the corresponding local DNS server in the subsequent ULCL UPF selection and DNS query.
4. VSMF selects and inserts ULCL UPF according to DNAI information and finds the corresponding local DNS server;
5. UE initiates DNS query through ULCL and PSA;
6. VUPF (PSA) forwards the DNS message to the local DNS server for processing and receives the query result;
7. VUPF (PSA) returns the query result to UE through VUPF (ULCL) for subsequent use in EAS discovery.

### Embodiment 3

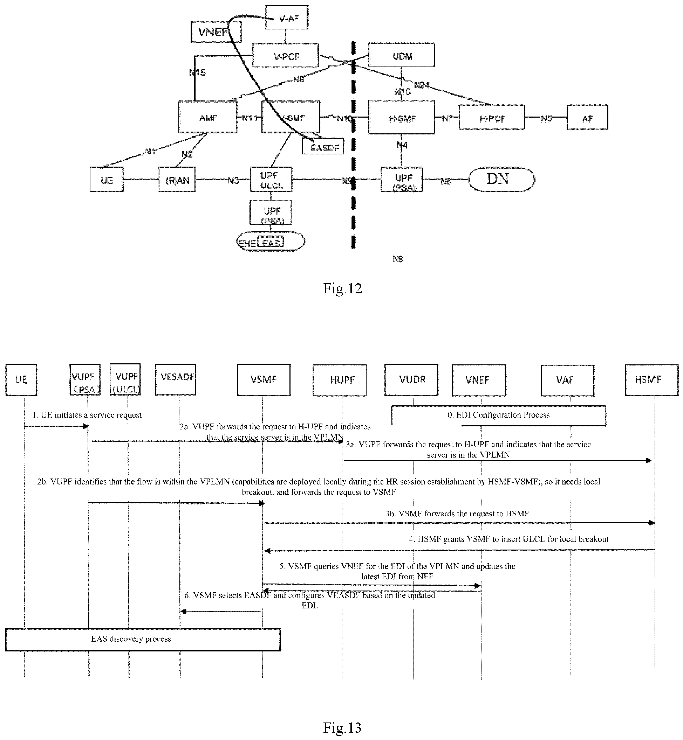

Fig. 12 is a schematic diagram of the implementation architecture of the third embodiment. As shown in the figure, under this architecture, when the HPLMN does not know the EAS information of the VPLMN, when the UE requests a service, the VUPF sends the request to the HSMF through the HUPF or VSMF, and indicates that the service server is local. The HSMF authorizes the VSMF to perform local session breakout. The VSMF requests the latest EDI information from the VNEF, and configures the VEASDF according to the EDI information. The VSMF dynamically inserts the ULCL and PSA according to the DNS query result returned by the VEASDF to perform local session breakout within the VPLMN.

Fig. 13 is a schematic diagram of a flow chart of a three-way splitting implementation process in an embodiment. As shown in the figure, the splitting implementation under this architecture may include:
0. VAF sends EDI information to VNEF through the EAS information configuration process and stores it in VUDR. The specific process can refer to steps 1-6 of embodiment 1 ;
1. UE initiates a service request to VUPF;
2a. The VUPF forwards the request to the HUPF and indicates that the service requested by the UE is within the VPLMN.
2b. The VUPF forwards the request to the VSMF, indicating that the service requested by the UE is within the VPLMN and local session breakout within the VPLMN is required;
3a. In case 2a occurs, HUPF forwards the request to HSMF;
3b. In case 2b occurs, VSMF forwards the request to HSMF;
4. HSMF authorizes VSMF to perform local session breakout;
5. VSMF goes to VNEF to query VPMN's EDI information and obtains the latest EDI from NEF;
6. VSMF selects EASDF and configures VEASDF according to the latest EDI;
   EAS discovery process: Find EAS based on the information returned by VEASDF.

### Embodiment 4

HPLMN does not know the EAS information of VPLMN, so a new interface is added between VPCF and VSMF. When UE requests a service, VUPF sends the request to HSMF through HUPF or VSMF, and indicates that the service server is local. HSMF authorizes VSMF to perform local session breakout. VSMF inserts ULCL and PSA according to the DNAI information sent by the AF influence process of VAF and searches for the local DNS server for local session breakout within VPLMN.

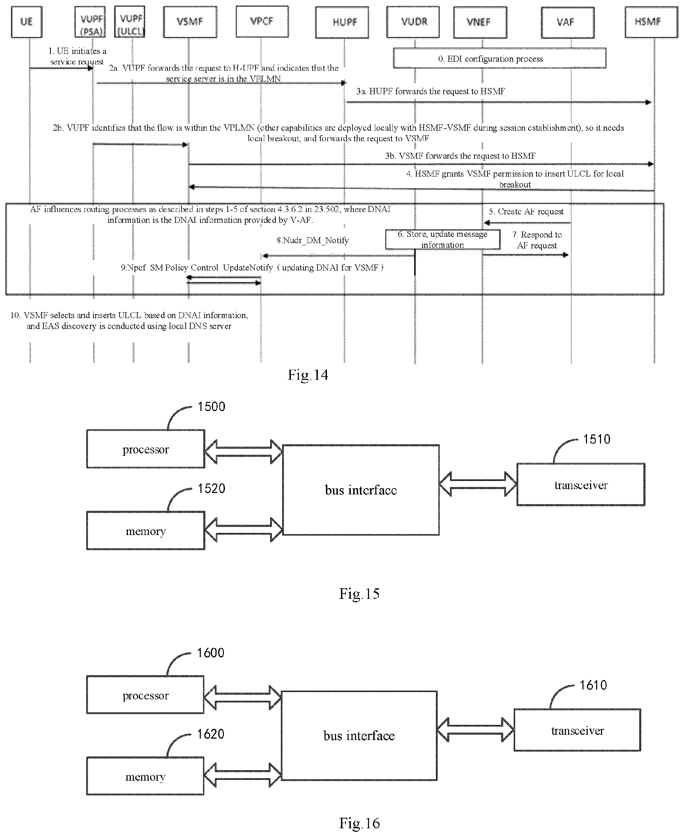

Fig. 14 is a schematic diagram of a flow chart of a flow splitting implementation in Embodiment 4. As shown in the figure, the flow splitting implementation in this architecture may include:
Steps 0-4 are the same as steps 0-4 of Example 3;
Steps 5-9 are the AF-affected routing process, the purpose of which is to send the relevant information of the VAF to the VSMF. The steps are the same as step 2 of the second embodiment, and may be specifically as follows:
   5. VAF creates an AF request to VNEF, which carries VAF's DNAI information and/or EAS information;
   6. VNEF stores and updates information (DNAI information and/or EAS information, etc.) to VUDR;
   7. VNEF responds to VAF request;
   8. VUDR initiates Nudr_DM_Notify (Npcf_Data Management Notification, also known as Data Management Function Modification ) message to VPCF and sends DNAI information to VPCF;
   9. VPCF sends the DNAI to VSMF through the Npcf_SM Policy Control _UpdateNotify (SM: Session Management) message. During the HR session establishment process, VSMF selects a PC F in the VPLMN as the SM PCF.
   10. VSMF selects and inserts ULCL based on DNAI information and/or EAS information, and discovers EAS based on the local DNS server.

Based on the same inventive concept, the embodiments of the present disclosure also provide an H-SMF, a UPF of a V-PLMN, an SMF of a V-PLMN, and a computer-readable storage medium. Since the principles of solving problems by these devices are similar to the information sending and session breakout methods, the implementation of these devices can refer to the implementation of the methods, and the repeated parts will not be repeated.

When implementing the technical solution provided by the embodiments of the present disclosure, it can be implemented as follows.

Fig. 15 is a schematic diagram of the SMF structure of the H-PLMN. As shown in the figure, the SMF includes:
a processor 1500 configure to read a program in a memory 1520 to perform:
during a Home-Routed roaming Protocol Data Unit (PDU) session establishment procedure or modification procedure, sending to the V-SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy;
a transceiver 1510 , configured to receive and send data under a control of the processor.

In the embodiment, the EAS information of the V-PLMN in the information is used by the V-SMF to configure an Edge Application Server Discovery Function (EASDF) of the V-PLMN.

In the embodiment, further including:
receiving fifth information sent by the V-SMF, where the fifth information includes one or a combination of: authorization of local session breakout in the V-PLMN, indication of supporting EASDF capability, and indication of supporting local session breakout capability in the V-PLMN.

In the embodiment, the EAS information of the V-PLMN received by the V-SMF is obtained by H-SMF from a network exposure function (NEF) of the H-PLMN.

In the embodiment, the relevant information of the AF of the V-PLMN received is obtained by H-SMF from a policy control function (PCF) of the H-PLMN.

In the embodiment, further including:
H-SMF obtaining sixth information from a unified data management (UDM) of the H-PLMN, where the sixth information indicates to perform a local session breakout.

In Fig. 15, the bus architecture may include any number of interconnected buses and bridges, specifically one or more processors represented by processor 1500 and various circuits of memory represented by memory 1520 are linked together. The bus architecture may also link together various other circuits such as peripherals, voltage regulators, and power management circuits, which are well known in the art and are therefore not further described herein. The bus interface provides an interface. The transceiver 1510 may be a plurality of components, namely, a transmitter and a receiver, providing a unit for communicating with various other devices on a transmission medium. The processor 1500 is responsible for managing the bus architecture and general processing, and the memory 1520 may store data used by the processor 1500 when performing operations.

The present disclosure also provides an H-SMF, including:
a H-SMF sending module, configured to:
during a Home-Routed roaming Protocol Data Unit (PDU) session establishment procedure or modification procedure, send to the V- SMF one or a combination of the following information:
Edge Application Server (EAS) information of the V-PLMN, an Edge Configuration Server (ECS) address of the V-PLMN, relevant information of an application function (AF) of the V-PLMN, information of authorization of local session breakout performed by V-SMF, and a session breakout policy.

In the embodiment, the H-SMF sending module is further configured to send the EAS information of the V-PLMN in the information used by the V-SMF to configure an Edge Application Server Discovery Function (EASDF) of the V-PLMN.

In the embodiment, further including:
a H-SMF receiving module, configured to receive fifth information sent by the V-SMF, where the fifth information includes one or a combination of: authorization of local session breakout in the V-PLMN, indication of supporting EASDF capability, and indication of supporting local session breakout capability in the V-PLMN.

In the embodiment, the H-SMF sending module is further configured to send the received EAS information of the V-PLMN obtained by H-SMF from a network exposure function (NEF) of the H-PLMN.

In the embodiment, the H-SMF sending module is further configured to send the received relevant information of the AF of the V-PLMN obtained by H-SMF from a policy control function (PCF) of the H-PLMN.

In the embodiment, the H-SMF receiving module is configured to obtain sixth information from a unified data management (UDM) of the H-PLMN, where the sixth information indicates to perform a local session breakout.

For the convenience of description, the various parts of the above-mentioned device are divided into various modules or units according to their functions and described separately. Of course, when implementing the present disclosure, the functions of each module or unit can be implemented in the same or multiple software or hardware.

Fig. 16 is a schematic diagram of the SMF structure of the V-PLMN. As shown in the figure, the SMF includes:
a processor 1600 configure to read a program in a memory 1620 to perform:
after receiving first information sent by a network function (NF) of a H-PLMN, performing a local session breakout;
a transceiver 1610, configured to receive and send data under a control of the processor.

In the embodiment, the NF of the H-PLMN is an SMF, or a policy control function (PCF), or a unified data management (UDM).

In the embodiment, further including:
sending a session breakout policy to the user plane function (UPF) of the V-PLMN.

In the embodiment, the performing local session breakout includes:
inserting or updating an uplink classifier (ULCL) according to first information, and selecting a local data network service (DNS) server according to the first information.

In the embodiment, the first information includes one or a combination of the following information:
a data network access identifier (DNAI), application information, edge application server (EAS) information, application service identification information.

In the embodiment, the EAS information is sent to an edge application server discovery function (EASDF) of the V-PLMN.

In the embodiment, the EAS information is obtained from H-SMF, or from a network exposure function (NEF) of the V-PLMN, or from other network functions (NFs) of the V-PLMN.

In Figure 16, the bus architecture can include any number of interconnected buses and bridges, specifically one or more processors represented by processor 1600 and various circuits of memory represented by memory 1620 are linked together. The bus architecture can also link various other circuits such as peripherals, regulators, and power management circuits together, which are all well known in the art, so they are not further described herein. The bus interface provides an interface. The transceiver 1610 can be a plurality of components, that is, including a transmitter and a receiver, providing a unit for communicating with various other devices on a transmission medium. The processor 1600 is responsible for managing the bus architecture and general processing, and the memory 1620 can store data used by the processor 1600 when performing operations.

The present disclosure also provides a V-SMF, including:
a session management function (SMF) session breakout module of a V-PLMN, configured to perform a local session breakout after receiving first information sent by a network function (NF) of a H-PLMN.

In the embodiment, the NF of the H-PLMN is an SMF, or a policy control function (PCF), or a unified data management (UDM).

In the embodiment, further including: an SMF sending module of a V-PLMN, configured to send a session breakout policy to the user plane function (UPF) of the V-PLMN.

In the embodiment, an SMF session breakout module of a V-PLMN is further configured to insert or update an uplink classifier (ULCL) according to first information, and selecting a local data network service (DNS) server according to the first information.

In the embodiment, the first information includes one or a combination of the following information:
a data network access identifier (DNAI), application information, edge application server (EAS) information, application service identification information.

In the embodiment, an SMF sending module of a V-PLMN is further configured to send the EAS information to an edge application server discovery function (EASDF) of the V-PLMN.

In the embodiment, the EAS information is obtained from H-SMF, or from a network exposure function (NEF) of the V-PLMN, or from other network functions (NFs) of the V-PLMN.

For the convenience of description, the various parts of the above-mentioned device are divided into various modules or units according to their functions and described separately. Of course, when implementing the present disclosure, the functions of each module or unit can be implemented in the same or multiple software or hardware.

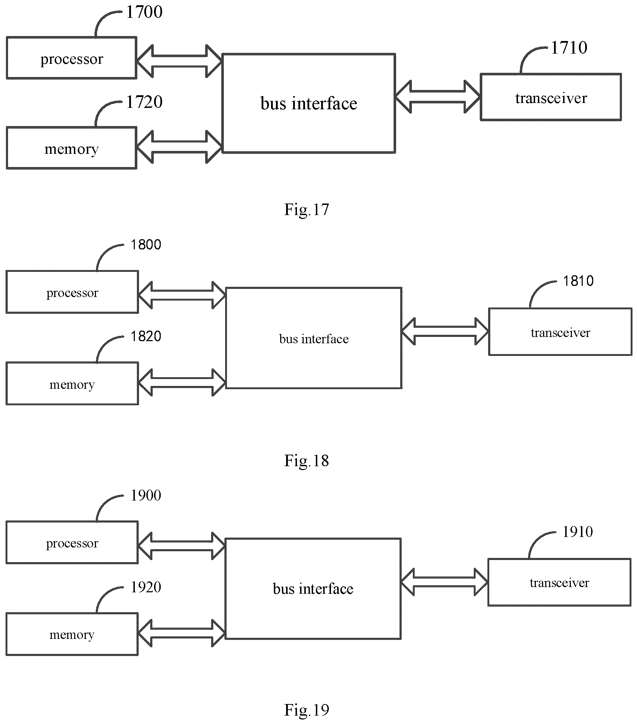

Fig. 17 is a schematic diagram of the UPF structure of the V-PLMN. As shown in the figure, the UPF includes:
a processor 1700 configure to read a program in a memory 1720 to perform:
receive second information initiated by a user equipment (UE), and send the second information to a H-SMF;
a transceiver 1710, configured to receive and send data under a control of the processor.

In the embodiment, the second information is sent to H-SMF via an SMF of a visited location or a UPF of a home location.

In the embodiment, the second information is a data network service (DNS) query message for discovering an edge application server.

In the embodiment, further including:
sending second information to a DNS server of the V-PLMN for processing.

In the embodiment,, further including:
after receiving a DNS feedback, returning the feedback information to the UE through an uplink classifier (ULCL) of the V-PLMN.

In Figure 17, the bus architecture can include any number of interconnected buses and bridges, specifically one or more processors represented by processor 1700 and various circuits of memory represented by memory 1720 are linked together. The bus architecture can also link various other circuits such as peripherals, regulators, and power management circuits together, which are all well known in the art and are therefore not further described herein. The bus interface provides an interface. The transceiver 1710 can be a plurality of components, namely, a transmitter and a receiver, providing a unit for communicating with various other devices on a transmission medium. The processor 1700 is responsible for managing the bus architecture and general processing, and the memory 1720 can store data used by the processor 1700 when performing operations.

The present disclosure also provides a UPF of a V-PLMN, including:
a user plane function (UPF) sending module of a V-PLMN, configured to receive second information initiated by a user equipment (UE) and send the second information to a H-SMF.

In the embodiment, the UPF sending module of the V-PLMN is further configured to send the second information to H-SMF via an V-SMF or a UPF of a H-PLMN.

In the embodiment, the second information is a data network service (DNS) query message for discovering an edge application server.

In the embodiment, the UPF sending module of the V-PLMN is further configured to send second information to a DNS server of the V-PLMN for processing.

In the embodiment, the UPF sending module of the V-PLMN is further configured to, after the UPF of the V-PLMN receives a DNS feedback, return the feedback information to the UE through an uplink classifier (ULCL) of the V-PLMN.

For the convenience of description, the various parts of the above-mentioned device are divided into various modules or units according to their functions and described separately. Of course, when implementing the present disclosure, the functions of each module or unit can be implemented in the same or multiple software or hardware.

Fig. 18 is a schematic diagram of the SMF structure of the V-PLMN. As shown in the figure, the SMF includes:
a processor 1800 configure to read a program in a memory 1820 to perform:
searching for a policy control function (PCF) of the V-PLMN, and performing a session management (SM) policy association with the PCF or triggering an SM policy association modification;
a transceiver 1810, configured to receive and send data under a control of the processor.

In the embodiment, the PCF of the V-PLMN is searched in a Home-Routed PDU session.

In the embodiment, further including:
receiving third information sent by the PCF of the V-PLMN, to insert or update an uplink classifier (ULCL) in the V-PLMN.

In the embodiment,, further including:
inserting or updating the ULCL according to the third information, and selecting a data network service (DNS) server of the V-PLMN according to the third information.

In the embodiment, the third information includes one or a combination of the following information:
a data network access identifier (DNAI), application information, edge application server (EAS) information, application service identification information.

In Figure 18, the bus architecture can include any number of interconnected buses and bridges, specifically one or more processors represented by processor 1800 and various circuits of memory represented by memory 1820 are linked together. The bus architecture can also link various other circuits such as peripherals, regulators, and power management circuits together, which are all well known in the art, so they are not further described herein. The bus interface provides an interface. The transceiver 1810 can be a plurality of components, that is, including a transmitter and a receiver, providing a unit for communicating with various other devices on a transmission medium. The processor 1800 is responsible for managing the bus architecture and general processing, and the memory 1820 can store data used by the processor 1800 when performing operations.

The present disclosure also provides an SMF of a V-PLMN, including:
a V-SMF selection module, configured to search for a policy control function (PCF) of the V-PLMN, and perform a session management (SM) policy association with the PCF or trigger an SM policy association modification.

In the embodiment, the SMF selection module of the V-PLMN is further configured to search the PCF of the V-PLMN in a Home-Routed PDU session.

In the embodiment, further including: a V-SMF receiving module configured to:
receive third information sent by the PCF of the V-PLMN, to insert or update an uplink classifier (ULCL) in the V-PLMN.

In the embodiment, the V-SMF selection module is further configured to insert or update the ULCL according to the third information, and select a data network service (DNS) server of the V-PLMN according to the third information.

In the embodiment, the third information includes one or a combination of the following information:
a data network access identifier (DNAI), application information, edge application server (EAS) information, application service identification information.

For the convenience of description, the various parts of the above-mentioned device are divided into various modules or units according to their functions and described separately. Of course, when implementing the present disclosure, the functions of each module or unit can be implemented in the same or multiple software or hardware.

Fig. 19 is a schematic diagram of the SMF structure of the V-PLMN. As shown in the figure, the SMF includes:
a processor 1900 configure to read a program in a memory 1920 to perform:
receiving fourth information from a policy control function (PCF) of a V-PLMN or an H-SMF in the case of a Home-Routed PDU session;
according to the fourth information, inserting or updating an uplink classifier (ULCL) in the V-PLMN of a terminal device, and discovering a data network service (DNS) server in the V-PLMN of the terminal device;
a transceiver 1910, configured to receive and send data under a control of the processor.

In the embodiment, the fourth information is sent by a unified data repository (UDR) of the V-PLMN to the PCF of the V-PLMN through a data management notification Nudr_DM_Notify message.

In the embodiment, the fourth information is sent by the PCF of the V-PLMN to the V-SMF through a session management policy control update notification Npcf_SMPolicyControl _UpdateNotify message.

In the embodiment, the fourth information includes one or a combination of the following information:
a data network access identifier (DNAI), application information, edge application server (EAS) information, application service identification information.

In Figure 19, the bus architecture can include any number of interconnected buses and bridges, specifically one or more processors represented by processor 1900 and various circuits of memory represented by memory 1920 are linked together. The bus architecture can also link various other circuits such as peripherals, regulators, and power management circuits together, which are all well known in the art and are therefore not further described herein. The bus interface provides an interface. The transceiver 1910 can be a plurality of components, namely, a transmitter and a receiver, providing a unit for communicating with various other devices on a transmission medium. The processor 1900 is responsible for managing the bus architecture and general processing, and the memory 1920 can store data used by the processor 1900 when performing operations.

The present disclosure also provides an SMF of a V-PLMN, including:
a V-SMF receiving module, configured to receive fourth information from a policy control function (PCF) of the V-PLMN or a H-SMF in the case of a Home-Routed PDU session;
a V-SMF processing module, configured to, according to the fourth information, insert or update an uplink classifier (ULCL) in the V-PLMN of a terminal device, and discover a data network service (DNS) server in the V-PLMN of the terminal device.

In the embodiment, the V-SMF receiving module is further configured to receive the fourth information sent by a unified data repository (UDR) of the V-PLMN to the PCF of the V-PLMN through a data management notification Nudr_DM_Notify message.

In the embodiment, the V-SMF receiving module is further configured to receive the fourth information sent by the PCF of the V-PLMN to the V-SMF through a session management policy control update notification Npcf_SMPolicyControl _UpdateNotify message.

In the embodiment, the fourth information includes one or a combination of the following information:
a data network access identifier (DNAI), application information, edge application server (EAS) information, application service identification information.

For the convenience of description, the various parts of the above-mentioned device are divided into various modules or units according to their functions and described separately. Of course, when implementing the present disclosure, the functions of each module or unit can be implemented in the same or multiple software or hardware.

A computer-readable storage medium is further provided in the embodiment of the present disclosure, storing a computer program, where the computer program is executed by a processor to perform the method hereinabove.

For specific implementation, please refer to the implementation of the above-mentioned information sending and session breakout methods.

In summary, in the technical solution provided by the embodiments of the present disclosure :
During the Home-Routed roaming PDU session establishment process, the HSMF sends at least one of the following information to the VSMF through the Nsmf_PDUSession_Create Request: EAS information of the VPLMN, DNAI information of the VAF, an indication of authorizing the VSMF to perform local session breakout within the VPLMN, session breakout capability of the VSMF, and capability of the VUPF to identify flows.

VSMF performs local session breakout according to the instructions of HSMF.

After receiving the service request initiated by the UE, the VUPF identifies that the service belongs to the VPLMN and forwards the request to the HUPF or VSMF. After receiving the request, the HUPF or VSMF forwards it to the HSMF.

During the Home-Routed roaming PDU session establishment process, the VSMF finds the PCF in the VPLMN for subscription query or update, and selects a PCF to perform SM Policy Association Establishment or SMF initiated SM Policy Association Modification. The PCF is selected as the VSM PCF of the VSMF.

In the case of a Home-Routed PDU session, the VPCF sends the DNAI information sent by the VAF to the VSMF.

In the case of a Home-Routed PDU session, the VSMF receives DNAI information from the VPCF or HPCF and selects and inserts the ULCL in the VPLMN based on the information.

The related art does not describe how to use edge computing functions in HR roaming scenarios. This solution needs to solve how to use edge computing capabilities in Home-Routed roaming scenarios, including the discovery of edge application servers EAS (Edge Application Server) or edge application server deployment environments EHE (Edge Host Environment). Here, EHE contains or is equal to an EAS instance. When a UE accesses EAS, it can be considered that the UE has accessed or accessed EHE, as well as how to perform local routing of traffic within a VPLMN, thereby filling the research gap in related technologies.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer program instructions. These computer program instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A method for sending information, comprising:
during a Home-Routed roaming Protocol Data Unit (PDU) session establishment procedure or modification procedure, a Session Management Function in Home Public Land Mobile Network (H-SMF) sending to a Session Management Function in Visited Public Land Mobile Network (V-SMF) one or a combination of the following information:
Edge Application Server (EAS) information of the Visited Public Land Mobile Network (V-PLMN), an Edge Configuration Server (ECS) address of the V-PLMN, relevant information of an application function (AF) of the V-PLMN, information of authorization of local session breakout performed by V-SMF, and a session breakout policy.

2. The method according to claim 1, wherein the EAS information of the V-PLMN in the information is used by the V-SMF to configure an Edge Application Server Discovery Function (EASDF) of the V-PLMN.

3. The method according to claim 1, further comprising:
H-SMF receiving fifth information sent by the V-SMF, wherein the fifth information comprises one or a combination of: authorization of local session breakout in the V-PLMN, indication of supporting EASDF capability, and indication of supporting local session breakout capability in the V-PLMN.

4. The method according to claim 1, wherein the EAS information of the V-PLMN received by the V-SMF is obtained by the H-SMF from a network exposure function (NEF) of the Home Public Land Mobile Network (H-PLMN).

5. The method according to claim 1, wherein the relevant information of the AF of the V-PLMN received by the V-SMF is obtained by H-SMF from a policy control function (PCF) of the H-PLMN.

6. The method according to claim 1, further comprising:
H-SMF obtaining sixth information from a unified data management (UDM) of the H-PLMN, where the sixth information indicates to perform a local session breakout.

7. A session breakout method, comprising:
a Session Management Function in Visited Public Land Mobile Network (V-SMF) receiving first information sent by a network function (NF) of a Home Public Land Mobile Network (H-PLMN) and performing a local session breakout.

8. The method according to claim 7, wherein the NF of the H-PLMN is an SMF, or a policy control function (PCF), or a unified data management (UDM).

9. The method according to claim 7, further comprising:
the V-SMF sending a session breakout policy to the user plane function (UPF) of the Visited Public Land Mobile Network (V-PLMN).

10. The method according to claim 7, wherein the performing local session breakout comprises:
the V-SMF inserting or updating an uplink classifier (ULCL) according to first information, and selecting a local data network service (DNS) server according to the first information.

11. The method according to claim 7 or 10, wherein the first information includes one or a combination of the following information:
a data network access identifier (DNAI), application information, edge application server (EAS) information, application service identification information.

12. The method according to claim 7, wherein the V-SMF sends the EAS information to an edge application server discovery function (EASDF) of the V-PLMN.

13. The method according to claim 12, wherein the EAS information is obtained from H-SMF, or from a network exposure function (NEF) of the V-PLMN, or from other network functions (NFs) of the V-PLMN.

14. A method for processing service request, comprising:
a user plane function (UPF) of a Visited Public Land Mobile Network (V-PLMN) receiving second information initiated by a user equipment (UE), and sending the second information to a session management function (SMF) of a Home Public Land Mobile Network (H-PLMN).

15. The method according to claim 14, wherein the second information is sent to H-SMF via a Session Management Function in Visited Public Land Mobile Network (V-SMF) or a User Plane Function (UPF) of the H-PLMN.

16. The method according to claim 14, wherein the second information is a data network service (DNS) query message for discovering an edge application server.

17. The method according to claim 14, further comprising:
the UPF of the V-PLMN sending second information to a DNS server of the V-PLMN for processing.

18. The method according to claim 17, further comprising:
after the UPF of the V-PLMN receives a DNS feedback, the UPF of the V-PLMN returning the feedback information to the UE through an uplink classifier (ULCL) of the V-PLMN.

19. A Policy Control Function (PCF) selection method, comprising:
a Session Management Function in Visited Public Land Mobile Network (V-SMF) searching for a policy control function (PCF) of a Visited Public Land Mobile Network (V-PLMN), and performing a session management (SM) policy association with the PCF or triggering an SM policy association modification.

20. The method according to claim 19, wherein the V-SMF searches for the PCF of the V-PLMN in a Home-Routed PDU session.

21. The method according to claim 19, further comprising:
receiving third information sent by the PCF of the V-PLMN, to insert or update an uplink classifier (ULCL) in the V-PLMN.

22. The method according to claim 21, further comprising:
the V-SMF inserting or updating the ULCL according to the third information, and selecting a data network service (DNS) server of the V-PLMN according to the third information.

23. The method according to any one of claims 21 to 22, wherein the third information includes one or a combination of the following information:
a data network access identifier (DNAI), application information, edge application server (EAS) information, application service identification information.

24. A session breakout method comprising:
a Session Management Function in Visited Public Land Mobile Network (V-SMF) receiving fourth information from a policy control function (PCF) of the Visited Public Land Mobile Network (V-PLMN) or a Session Management Function in Home Public Land Mobile Network (H-SMF) in the case of a Home-Routed PDU session;
according to the fourth information, inserting or updating an uplink classifier (ULCL) in the V-PLMN of a terminal device, and discovering a data network service (DNS) server in the V-PLMN of the terminal device.

25. The method according to claim 24, wherein the fourth information is sent by a unified data repository (UDR) of the V-PLMN to the PCF of the V-PLMN through a data management notification Nudr_DM_Notify message.

26. The method according to claim 24, wherein the fourth information is sent by the PCF of the V-PLMN to the V-SMF through a session management policy control update notification Npcf_SMPolicyControl _UpdateNotify message.

27. The method according to any one of claims 24 to 26, wherein the fourth information comprises one or a combination of the following information:
a data network access identifier (DNAI), application information, edge application server (EAS) information, application service identification information.

28. A Session Management Function in Visited Public Land Mobile Network (V-SMF), comprising:
a processor configure to read a program in a memory to perform:
during a Home-Routed roaming Protocol Data Unit (PDU) session establishment procedure or modification procedure, Session Management Function in Home Public Land Mobile Network (H-SMF) sending to a Session Management Function in Visited Public Land Mobile Network (V-SMF) one or a combination of the following information:
Edge Application Server (EAS) information of the Visited Public Land Mobile Network (V-PLMN), an Edge Configuration Server (ECS) address of the V-PLMN, relevant information of an application function (AF) of the V-PLMN, information of authorization of local session breakout performed by V-SMF, and a session breakout policy;
a transceiver, configured to receive and send data under a control of the processor.

29. A Session Management Function in Home Public Land Mobile Network (H-SMF), comprising:
a H-SMF sending module, configured to:
during a Home-Routed roaming Protocol Data Unit (PDU) session establishment procedure or modification procedure, send to a Session Management Function in Visited Public Land Mobile Network (V-SMF) one or a combination of the following information:
Edge Application Server (EAS) information of the Visited Public Land Mobile Network (V-PLMN), an Edge Configuration Server (ECS) address of the V-PLMN, relevant information of an application function (AF) of the V-PLMN, information of authorization of local session breakout performed by V-SMF, and a session breakout policy.

30. A Session Management Function in Visited Public Land Mobile Network (V-SMF), comprising:
a processor configure to read a program in a memory to perform:
after receiving first information sent by a network function (NF) of a Home Public Land Mobile Network (H-PLMN), performing a local session breakout;
a transceiver, configured to receive and send data under a control of the processor.

31. A Session Management Function in Visited Public Land Mobile Network (V-SMF), comprising:
a V-SMF session breakout module, configured to perform a local session breakout after receiving first information sent by a network function (NF) of a Home Public Land Mobile Network (H-PLMN).

32. A User Plane Function (UPF) of Visited Public Land Mobile Network (V-PLMN), comprising:
a processor configure to read a program in a memory to perform:
receive second information initiated by a user equipment (UE), and send the second information to a Session Management Function in Home Public Land Mobile Network (H-SMF);
a transceiver, configured to receive and send data under a control of the processor.

33. A User Plane Function (UPF) of Visited Public Land Mobile Network (V-PLMN), comprising:
a user plane function (UPF) sending module of a V-PLMN, configured to receive second information initiated by a user equipment (UE) and send the second information to a Session Management Function in Home Public Land Mobile Network (H-SMF).

34. A Session Management Function in Visited Public Land Mobile Network (V-SMF), comprising:
a processor configure to read a program in a memory to perform:
searching for a policy control function (PCF) of a Visited Public Land Mobile Network (V-PLMN), and performing a session management (SM) policy association with the PCF or triggering an SM policy association modification;
a transceiver, configured to receive and send data under a control of the processor.

35. A Session Management Function in Visited Public Land Mobile Network (V-SMF), comprising:
a V-SMF selection module, configured to search for a policy control function (PCF) of a Visited Public Land Mobile Network (V-PLMN), and perform a session management (SM) policy association with the PCF or trigger an SM policy association modification.

36. A Session Management Function in Visited Public Land Mobile Network (V-SMF), comprising:
a processor configure to read a program in a memory to perform:
receiving fourth information from a policy control function (PCF) of a Visited Public Land Mobile Network (V-PLMN) or a Session Management Function in Home Public Land Mobile Network (H-SMF) in the case of a Home-Routed PDU session;
according to the fourth information, inserting or updating an uplink classifier (ULCL) in the V-PLMN of a terminal device, and discovering a data network service (DNS) server in the V-PLMN of the terminal device;
a transceiver, configured to receive and send data under a control of the processor.

37. A Session Management Function in Visited Public Land Mobile Network (V-SMF), comprising:
a V-SMF receiving module, configured to receive fourth information from a policy control function (PCF) of a Visited Public Land Mobile Network (V-PLMN) or a Session Management Function in Home Public Land Mobile Network (H-SMF) in the case of a Home-Routed PDU session;
a V-SMF processing module, configured to, according to the fourth information, insert or update an uplink classifier (ULCL) in the V-PLMN of a terminal device, and discover a data network service (DNS) server in the V-PLMN of the terminal device.

38. A computer-readable storage medium, storing a computer program, wherein the computer program is executed by a processor to perform the method according to any one of claims 1 to 27.
